# EUROPEAN PATENT SPECIFICATION

(11) **EP 4 449 060 B1**
(45) Date of publication and mention of the grant of the patent: **21.01.2026**
(21) Application number: 22829907.9
(22) Date of filing: 15.12.2022
(51) Int. Cl.: G01C 23/00

(54) **RENDERING A SKY VEIL ON AN AVIONIC PRIMARY FLIGHT DISPLAY**
DARSTELLUNG EINES HIMMELSCHLEIERS AUF EINER PRIMÄREN FLUGZEUGANZEIGE
RENDU D'UN VOILE DE CIEL SUR UNE UNITÉ D'AFFICHAGE PRINCIPALE DE COMMANDES DE VOL AVIONIQUES

(30) Priority: 15.12.2021 EP 21425066
(43) Date of publication of application: 23.10.2024
(60) Divisional application: 25220473.0
(73) Proprietor: Leonardo S.p.a., 00195 Roma (IT)
(72) Inventor: BRUGNOLI, Eugenio, 00195 ROMA (IT); TRIPELLI, Jonathan, 00195 ROMA (IT)
(74) Representative: Studio Torta S.p.A.
(86) International application number: PCT/IB2022/062285
(87) International publication number: WO 2023/111929

(56) References cited:
- EP-A2- 2 602 765
- US-A- 5 798 713
- US-A1- 2017 183 103
- US-B1- 7 724 155

## Description

### CROSS-REFERENCE TO RELATED APPLICATIONS

This Patent Application claims priority from European Patent Application No. 21425066.4 filed on December 15, 2021.

### TECHNICAL FIELD OF THE INVENTION

The present invention relates, in general, to avionic display systems, in particular to synthetically rendering a sky veil on avionic primary flight displays (PFDs) for improving situational awareness of pilots in particular flight conditions that result in so-called brown-over-brown display conditions, where terrain is rendered on the primary flight display whereas a small portion of the sky or even no sky at all is rendered on the primary flight display and hence the need is felt by the pilots for the position of the sky to be indicated relative to the rendered terrain.

### STATE OF THE ART

As is known, nowadays, the increased complexity of aircrafts such as aeroplanes and helicopters led to a great increase of the flight crew workload necessary for a safe flight. Different avionics systems have been developed in order to help the flight crew to operate and ultimate tasks in safe conditions, and in particular situational awareness of the pilots has become of paramount importance.

Various display systems and methods have thus been developed to improve the situational awareness of the pilots. One particular type of system that has been developed to increase the flight crew situational awareness is called synthetic vision system, which is a computer-mediated reality system for aerial vehicles that uses 3D synthetic image rendering to provide pilots with clear and intuitive understanding the flying environment. The synthetic vision system is designed to render on a primary flight display a 3D representative of an out-the-window view of the pilot as the background of a primary flight display in which all the flight symbols are represented.

Particular flight conditions, *e*.*g*., when an aircraft is flying near certain terrain, such as mountains, or is landing, may result in the aforementioned brown-over-brown display conditions, which may be partial or full, wherein a partial brown-over-brown display situation it meant to indicate flight conditions that result in some sky being rendered on the primary flight display, while a full brown-over-brown display situation is meant to indicate flight condition that result in no sky at all being rendered on the primary flight display.

Brown-over-brown display situations are safety-critical situations because they may generate confusion and/or disorientation in the pilots of the aircrafts, who strongly need to know exactly where the sky is located relative to the rendered terrain.

To address this need, EP 2 602 765 A2 discloses an aircraft display system wherein a sky veil is rendered on a flight display at least partially transparent and in such a manner that portions of the sky veil that overlap with the rendered sky are not discernible, the rendered terrain is viewable through portions of the sky veil that overlap with terrain, the sky veil is rendered perpendicular to the pitch tape and parallel to the zero pitch reference line and to extend a predetermined distance from a skyward edge of the flight display as measured along a line that is parallel to the pitch tape.

### OBJECT AND SUMMARY OF THE INVENTION

The Applicant has felt the need to improve the existing technology to further improve the situational awareness of the pilots.

According to the present invention, an avionic display software is provided, as claimed in the appended claims.

### BRIEF DESCRIPTION OF THE DRAWINGS

Figure 1 shows a functional block diagram of an embodiment of an aircraft;
Figures 2-4 show an image rendered by the avionic display software according to an embodiment not falling under the scope of the present invention; and
Figures 5-7 show an image rendered by the avionic display software according to a different embodiment of the present invention.

### DESCRIPTION OF PREFERRED EMBODIMENTS OF THE INVENTION

The present invention will now be described in detail with reference to the attached figures to allow a skilled person to make and use it. Various modifications to the embodiments described will be immediately apparent to skilled person and the generic principles described can be applied to other embodiments and applications without thereby departing from the scope of the present invention, as defined in the attached claims. Therefore, the present invention should not be considered limited to the embodiments described and illustrated herein, but should be accorded the broadest scope of protection consistent with the described and claimed features.

Unless otherwise defined, all technical and scientific terms used herein have the same meaning commonly used by persons of ordinary experience in the field pertaining to the present invention. In the event of a conflict, this description, including the definitions provided, will be binding. Furthermore, the examples are provided for illustrative purposes only and as such should not be regarded as limiting.

In particular, the block diagrams included in the attached figures and described below are not intended as a representation of the structural characteristics, or constructive limitations, but must be interpreted as a representation of functional characteristics, *i.e.* intrinsic properties of the devices and defined by the effects obtained or functional limitations and which can be implemented in different ways, therefore in order to protect the functionality of the same (possibility of functioning).

In order to facilitate the understanding of the embodiments described herein, reference will be made to some specific embodiments and a specific language will be used to describe them. The terminology used herein has the purpose of describing only particular embodiments, and is not intended to limit the scope of the present invention which is defined by the appended claims.

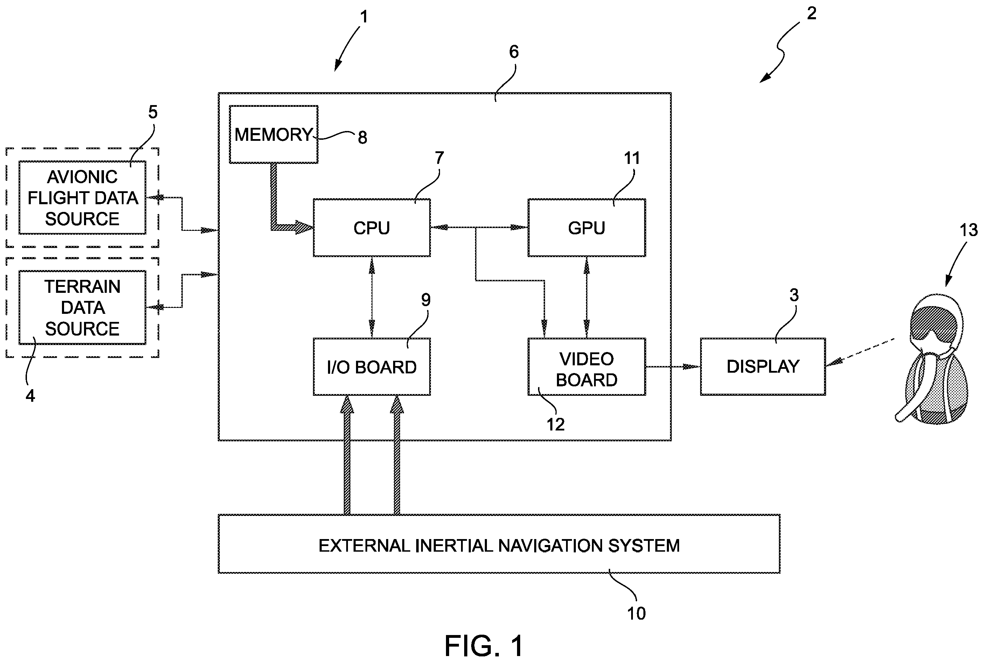

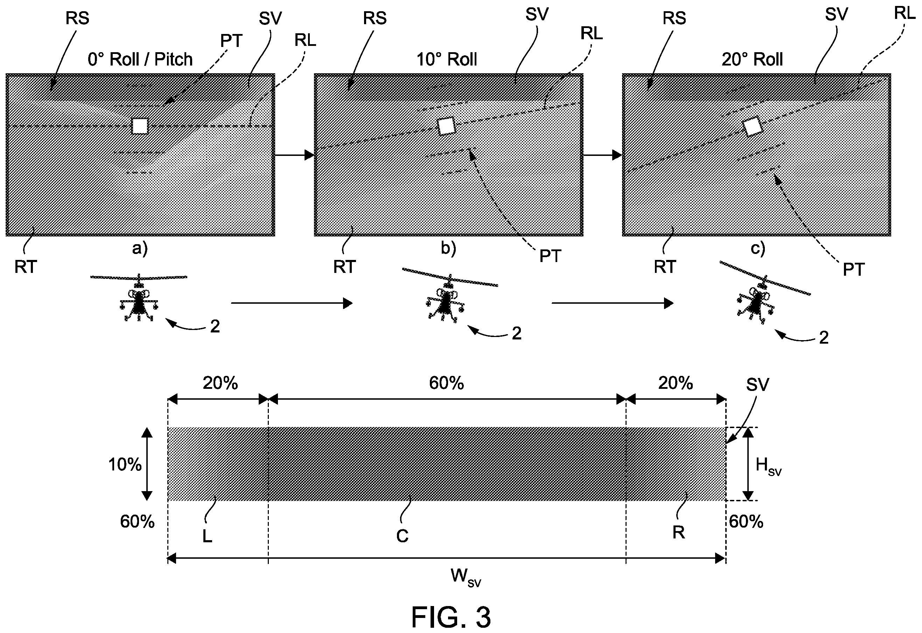

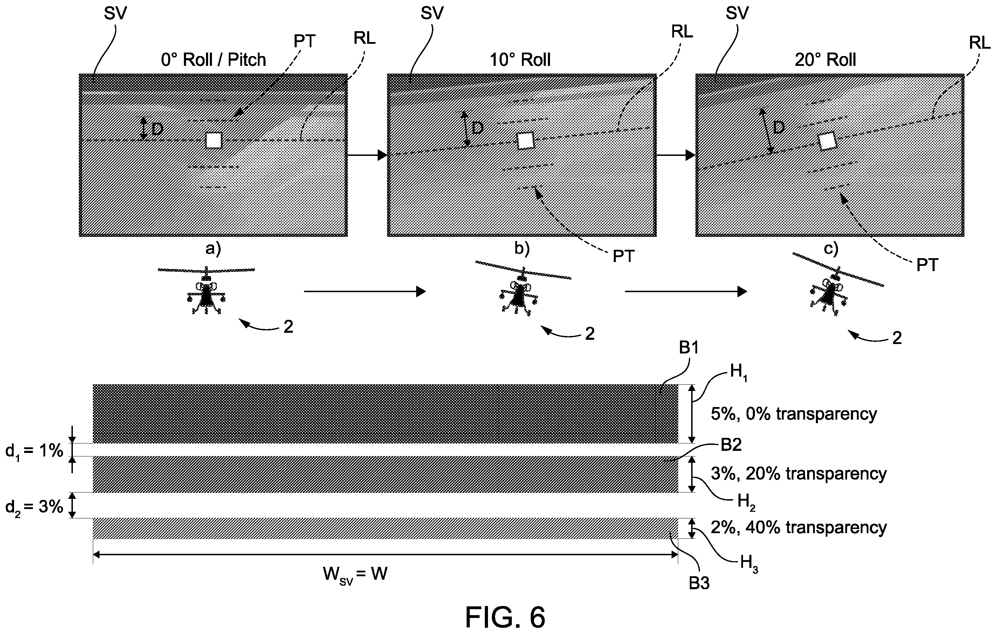

Figure 1 shows an avionic display system **1** of an aircraft **2** (shown in Figures 3 and 6) comprising an avionic display software according to the present invention. The aircraft **2,** in particular the avionic display system **1,** comprises:
- a display device **3** coupled to receive image rendering display commands and responsively display rendered images;
- a terrain data source **4** to output terrain data representative of terrain in a field of view of a pilot **13** of the aircraft **2;**
- an avionic flight data source **10** to output avionic data representative of an avionic state of the aircraft **2,** including a roll angle thereof; and
- computing resources **6** coupled to the terrain data source **4** to receive terrain data therefrom, to the avionic flight data source **10** to receive avionic data therefrom, and to the display device **3** to supply image rendering display commands thereto based on the received terrain and avionic data.

In particular, the avionic display software is executable by the computing resources **6** to cause, when executed, the computing resources **6** to become programmed to cause rendered images representative of an out-the-window view of the pilot of the aircraft **2** to be displayed by the display device **3.**

In an exemplary embodiment, the terrain data source **4** comprises a terrain data database structured to store terrain data representative of the terrain within the field of view of the pilot of the aircraft **2.** Thus, the terrain data database is a 3D map of the terrain as a function of the altitude, *i.e.* a matrix containing data relative to the altitude of the terrain.

According to a further embodiment of the present invention, not described in detail hereinafter, the terrain data in the terrain data database is determined by a sensory system (not shown) on the aircraft **2** and, thus, is determined while the aircraft **2** is in flight.

The avionic display system **1** further comprises an avionic graphic data source **5** comprising graphic component symbolising real items and symbology used to represent avionic quantities of the aircraft **2,** such as attitude, altitude, heading and speeds (*e.g.,* ground speed, airspeed, vertical speed, *etc*.), indicative of the state of the aircraft 2 and output avionic data indicative of the sensed avionic quantities;

According to another embodiment of the present invention, the avionic flight data source **10** is in the form of an external inertial navigation system **10** which is a system comprising motion sensors, such as accelerometers, rotation sensors, such as gyroscopes, and a dedicated electronic control unit, not shown, designed to calculate *e.g.* by dead reckoning the position, the orientation and the velocity of the aircraft **2** and generate the corresponding data.

The computing resources **6** further comprise:
- an electronic control unit **7** designed to communicate with the terrain data source **4** and the avionic graphic data source **5** and to receive and process the data from the terrain data source **4** and the avionic graphic data source **5** to generate data relative to the display commands;
- a memory **8,** here a SATA memory, designed to communicate with the electronic control unit **7** and to receive and store the data from the terrain data source **4** and the avionic graphic data source **5;**
- an input/output (I/O) board **9** designed to communicate with the electronic control unit **7** and the external inertial navigation system **10** of the aircraft **2,** wherein the I/O board **9** is designed to receive data from the external inertial navigation system **10** and transmit them to the electronic control unit **7;**
- a graphic control unit, GPU, **11** designed to communicate with the electronic control unit **7** and to receive and process the data relative to the display commands to have them displayed on the display device **3;** and
- a video board **12** designed to communicate with the electronic control unit **7,** the GPU **11** and the display device **3** to receive the data relative to the display commands and display them on the display device **3.**

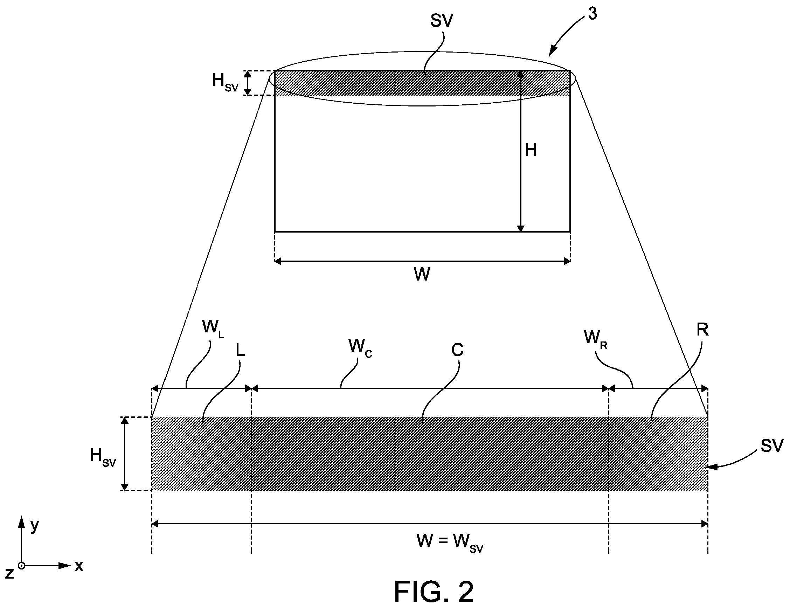

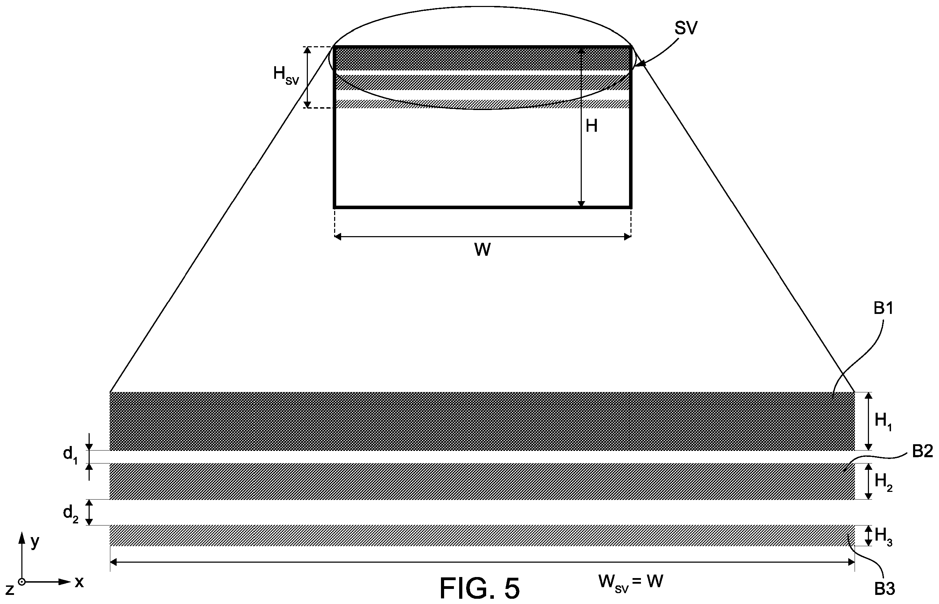

Figures 2-4 show synthetic images to be shown to a pilot **13** rendered on the display device **3** according to an embodiment not falling under the scope of the present invention, hereinafter referred to as Sloshing embodiment or mode, whereas Figures 5-7 show synthetic images rendered on the display device **3** according to an embodiment of the present invention, hereinafter referred to as Multi-Strip embodiment or mode.

According to an aspect of the present disclosure, the avionic display software is designed, when executed, to make the computing resources **6** to be designed to allow the pilot **13** to select either the Sloshing mode or the Multi-Strip mode, in particular by rendering an interface on the display device **3** with which the pilot **13** may interact to select the desired mode for the synthetic images.

In both embodiments, a rendered image has conveniently a generally rectangular shape with a width **W,** taken along a first direction (here parallel to an x-axis of a Cartesian reference system xyz), and a height **H,** taken along a second direction (here parallel to a y-axis of the Cartesian reference system xyz), and is representative of the out-of-the-window view of the pilot of the aircraft **2.** The rendered image also has a skyward edge, which is an edge defining the position of the sky in the rendered image; as also described in detail below, the skyward edge may vary its position according to the position of the aircraft **2,** in particular in terms of roll angle.

A rendered image comprises one or both of rendered terrain **RT** and rendered sky **RS,** which are representative of real-world terrain and sky outside of the aircraft **2** and whose positions and orientations are dependent upon position and orientation of the aircraft **2** relative thereto. The terrain is preferably rendered using different shades of a first color, in particular an earth tone, such as brown/green, whereas sky is preferably rendered in a single shade of a second color different from the first color, such as a blue tone.

In both embodiments, the rendered image further includes rendered flight-related information comprising a rendered zero pitch reference line **RL** (see Figures 3 and 6); the rendered flight-related information further comprises a rendered pitch tape or ladder **PT.** In particular, the pitch tape or ladder **PT** provides an indication of an aircraft pitch, whereas the rendered zero pitch reference line **RL** is an imaginary reference line originating at the aircraft **2** and parallel to the Earth's surface, and thus indicates what is above and below the aircraft **2.**

In both embodiments, the rendered image may further include additional flight-related information (not shown), such as altitude, vertical speed, flight plans, a roll pointer, a flight path vector, a flight path predictor, *etc.*

In both embodiments, the rendered image further includes a rendered sky veil **SV;** in particular, the sky veil **SV** is an overlapping graphic representation in the rendered image having attributes described here below with reference to Figures 2-6, some of which are common to the Sloshing and the Multi-Strip embodiments, whereas others are different.

In both embodiments, the sky veil **SV** is rendered either continuously or selectively, based on a proprietary rendering criterion, conveniently continuously.

In particular, in both embodiments, the sky veil **SV** is an overlapping graphic representation rendered at least partially transparent in such a manner that (i) portions of the rendered sky veil **SV** that (eventually) overlap with the rendered sky **RS** are not discernable from the rendered sky **RS,** and (ii) the rendered terrain **RT** is viewable through transparent portions of the sky veil **SV** that overlap with the rendered terrain **RT.**

In both embodiments, the sky veil **SV** has a respective width **W_{SV}** and a respective height **H_{SV}.** In particular, the width **W_{SV}** of the sky veil **SV** is defined as the distance between side edges of the sky veil **SV** which are parallel to the second direction, *i.e.* parallel to the direction of the height **H** of the rendered image, and the height **H_{SV}** of the sky veil **SV** is defined as the distance between a top and bottom edge of the sky veil **SV** which are parallel to the first direction, *i.e.* parallel to the direction of the width **W** of the rendered image.

Furthermore, the sky veil **SV** is rendered to exhibit one or more of the following features:
a) extending parallel to a skyward edge of the rendered image;
b) extending for an entire width **W** of the skyward edge of the rendered image;
c) extending from the skyward edge of the rendered image for a height **H_{SV}** which is a function, in particular a percentage, of a height **H** of the rendered image;
d) having substantially constant height **H_{SV}** throughout its width **W_{SV}** ; and
e) having the same color as the rendered sky **RS.**

According to a preferred aspect of the present disclosure, in both embodiments, the sky veil **SV** is represented as a stand-alone graphic layer overlapped with the rest of the representation on the rendered image. The sky veil **SV** is depicted *e.g.* with the same colour of the synthetic sky in order that portions of the sky that overlap with the rendered sky are not discernible. In this way, a minimum portion of the sky, also in a brown-over-brown situation, is always represented and the transparency zone provides the visibility of terrain portions that overlap with the sky veil **SV.** This mechanism allows the pilot to know the sky position with a relevant increasing of its situational awareness.

Furthermore, in both embodiments and according to a preferred aspect of the present invention, the sky **SV** veil is rendered to extend from a skyward edge of the rendered image for a height **H_{SV}** that is conveniently a function, in particular a percentage, of the height **H** of the rendered image, and, conveniently, to extend for the entire width **W** of the rendered image. In other words, the width **W_{SV}** of the sky veil **SV** is equal to the width **W** of the rendered image.

In the Sloshing embodiment shown in Figures 2-4, the sky veil **SV** is rendered as a band, in particular a straight band, *i.e.* extending along the direction of the width **W** of the rendered image without a curve or bend, stationary in the rendered image during roll of the aircraft **2;** furthermore, the sky veil **SV** is rendered at least partially transparent along its width **W_{SV}** such that a width of a transparent region of the sky veil **SV** depends on a roll angle of the aircraft **2.** In further detail, the sky veil **SV** is rendered as a single long narrow stripe or band of substantially the same height **H_{SV}** throughout its width **W_{SV}** and with the same color as the rendered sky **RS.** The sky veil **SV** is rendered to remain in a stationary position in the rendered image regardless of the flight attitude of the aircraft **2,** namely regardless of any pitch, roll and yaw angles.

The rendered sky veil **SV** comprises two side or lateral portions or regions **L, R,** and an intermediate or central or middle portion or region **C,** each with a respective width and transparency. In particular, the side regions **L, R** are at least partially transparent and the middle region **C** is opaque.

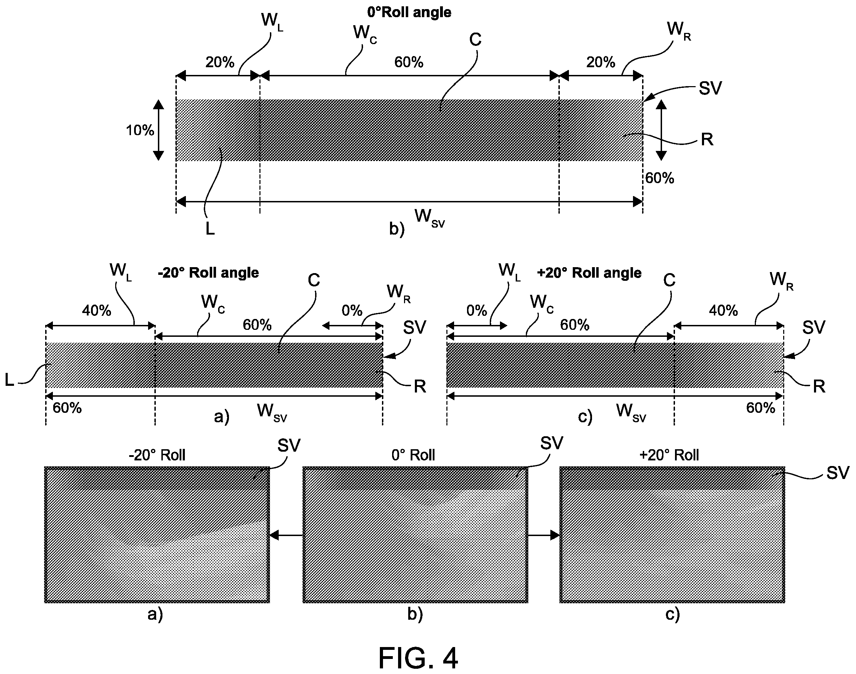

According to an embodiment shown in Figures 3 and 4, the width **W_{C}** of the middle region **C** is invariable with the roll angle of the aircraft **2;** in further detail, the width **W_{C}** of the middle region **C** is a function, in particular a percentage, conveniently and exemplarily 60%, of the width **W** of the rendered image. Furthermore, the width **W_{C}** of the middle region **C** is invariable with the pitch angle of the aircraft **2.** I

Furthermore, the side regions **L, R** have widths **W_{L}, W_{R}** variable with the roll angle of the aircraft **2,** *i.e.* when the roll angle is different from 0° wherein the widths **W_{L}, W_{R}** are fixed. In further detail, the widths **W_{L}, W_{R}** of the side regions **L, R** vary oppositely with the roll angle of the aircraft **2** within respective variation ranges so as to result in the rendered sky veil **SV** having a constant width **W_{SV}.** The widths **W_{L}, W_{R}** of the side regions **L, R** vary with the roll angle and are invariable with the pitch angle of the aircraft **2.** In particular, the widths **W_{L}, W_{R}** of the side regions **L, R** vary discretely with a variation step as the roll angle of the aircraft **2** varies discretely with a corresponding variation step, in particular vary discretely with the roll angle of the aircraft **2** within a variation range with a positive or negative variation step for each positive or negative variation step of the roll angle; in further detail, the widths **W_{L}, W_{R}** of the side regions **L, R** vary with a variation step which is a percentage, conveniently and exemplarily 1%, of the width **W** of the rendered image from an initial value which is a percentage, conveniently and exemplarily 20%, of the width **W** of the rendered image, to a final value which is a percentage, conveniently and exemplarily 40%, of the width **W** of the rendered image, as the roll angle of the aircraft **2** varies with a variation step, conveniently and exemplarily ±1°, from a zero initial value to a final value, conveniently and exemplarily ±20°.

The middle region **C** has a transparency substantially constant along its width **W_{C}** and invariable with the roll angle of the aircraft **2,** conveniently and exemplarily equal or close to 0%, so as to be substantially fully opaque. Furthermore, due to the fact that it is opaque, the middle region **C** has the same color as the rendered sky, regardless of the roll angle of the aircraft **2.** In addition, the side regions **L, R** have transparencies progressively increasing outwardly, *i.e.* that increase from respective inner edges adjacent to the middle portion **C** to respective outer edges of the sky veil **SV** *(i.e.,* towards the edges of the rendered image); thus, the side regions **L, R** increasingly become more transparent when moving from the middle region **C** of the sky veil **SV** towards the edges thereof. In further detail, the transparencies of the side regions **L, R** increase from the inner edges towards the outer edges thereof, namely and exemplarily from a minimum of 0% to a maximum of 60%. In particular and as a way of example, with reference to Figure 4, in particular Figures 4a) and 4c), when the roll angle is equal to -20° (Figure 4a)), the width **W_{L}** of the side region **L** is equal to a value which is a function, in particular a percentage, conveniently and exemplarily 40%, of the width **W** of the rendered image; furthermore, the width **W_{R}** of the side region **R** is equal to a value which is a function, in particular a percentage, conveniently and exemplarily 0%, of the width **W** of the rendered image. Furthermore, when the roll angle is equal to +20° (Figure 4c)), the width **W_{L}** of the side region **L** is equal to a value which is a function, in particular a percentage, conveniently and exemplarily 0%, of the width of the rendered image; furthermore, the width **W_{R}** of the side region **R** is equal to a value which is a function, in particular a percentage, conveniently and exemplarily 40%, of the width **W** of the rendered image.

It is noted that the abovementioned values for the width, height and transparency of the regions **C, L** and **R** may be varied and customized according, *e.g.,* to the needs of the pilot **13** or other visualisation criteria.

In this configuration, shown in Figure 2-4, the displacement of the opaque and transparency regions along the full width **W_{SV}** of the band of the sky veil **SV** and, thus, the width **W** of the rendered image. This graphical effect has the aim of increasing the pilot's perception of the location of the largest part of the sky as a function of the aircraft dynamics.

In the Multi-Strip embodiment shown in Figures 5-7, and according to the present invention, the sky veil **SV** is rendered as a band, in particular a straight band (, *i.e.* extending along the direction of the width **W** of the rendered image without a curve or bend) with a motion, conveniently a tilting motion, in the rendered image during roll of the aircraft **2** as a function a roll angle thereof. In further detail, the sky veil **SV** is rendered as a band comprising a plurality, here three, of parallel and spaced-apart sub-bands **B₁-B₃;** in particular, the sub-bands **B₁-B₃** are represented as single long narrow stripes or bands with the same color as the rendered sky **RS.**

According to the embodiment of Figures 5-7, and according to the present invention, the sky veil **SV** is rendered at least partially transparent along its height. In this way, a portion of the sky veil **SV** is always rendered even in a brown-over-brown situations and the transparent areas of the rendered sky veil **SV** provides the visibility of the rendered terrain **RT** that overlap with the rendered sky veil **SV.** This allows the pilot of the aircraft **2** to know the position of the sky in any flight condition, thereby increasing the situational awareness.

In particular, the sky veil **SV** is rendered to move, in particular tilt or incline, in solidarity with the roll angle, *i.e.* tilt or incline with respect to an axis longitudinal to the aircraft **2,** here the rolling axis (*i.e.* the axis wherein the roll angle is measured, that is the axis with respect to which the aircraft **2** rolls), so that the sky veil **SV** is parallel to an artificial horizon, *i.e.* the rendered zero pitch reference line **RL,** thus providing the pilot **13** with the feeling of the synthetic representation movement. Moreover, the sky veil **SV** is rendered to be visible even with high attitude angles (*e.g.,* greater than 90°).

The sky veil **SV** is rendered to move, conveniently tilt or incline, in the rendered image in accordance with the flight attitude of the aircraft **2,** conveniently as a function of the roll angle. In particular, the sky veil **SV** is rendered to tilt perpendicularly to the direction at which the aircraft **2** is inclined as a result of the variation of the roll angle. As also shown in Figure 5, when the value of the roll angle is equal to 0° (*i.e.* the aircraft **2** does not tilt), the sky veil **SV** is rendered to be in a stationary position in the rendered image (a)); when the value of the roll angle varies up to ±20° (*i.e.* the aircraft **2** tilts according to the roll angle, see Figures 5b) and 5c) respectively), the sky veil **SV** is rendered to tilt at an angle with a value up to ∓20° on the rendered image. Due to the tilting of the sky veil **SV,** the sub-bands **B₁-B₃** are only partially visible, conveniently at the top angles of the rendered image.

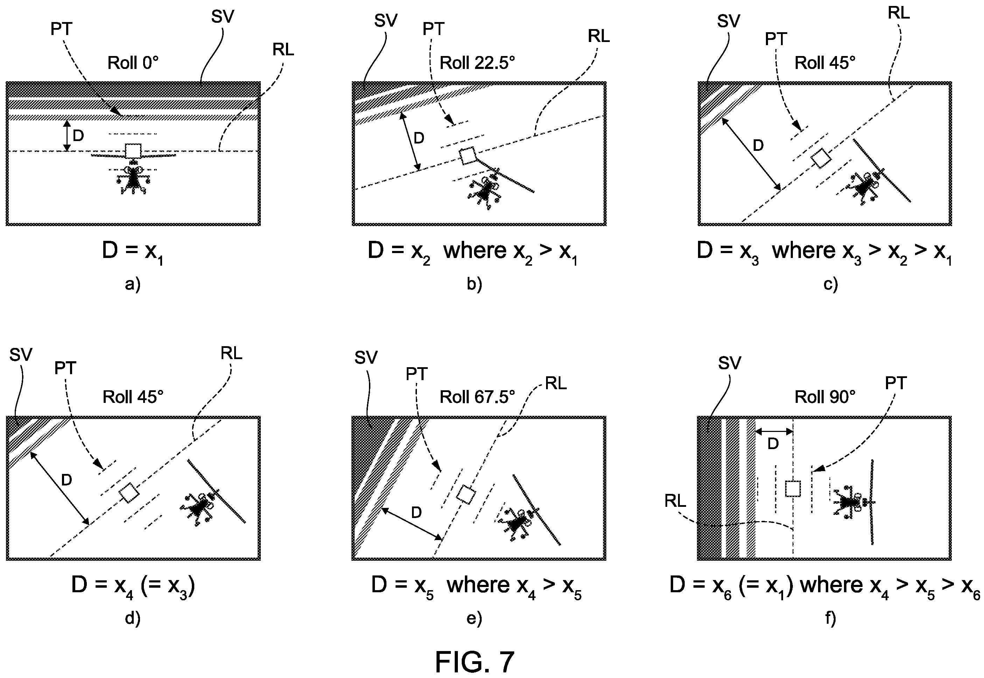

With reference to Figure 7, in the Multi-Strip embodiment, the sky veil **SV** is rendered parallel to the rendered zero pitch reference line **RL** at a distance **D** therefrom which is dependent on the roll angle of the aircraft **2;** in further detail, the distance **D** is defined as the distance between the rendered zero pitch reference line **RL** and the lowest sub-band of the sky veil **SV,** *i.e.* the sub-band of the sky veil **SV** closer to rendered zero pitch reference line **RL,** here the sub-band **B₃.**

Furthermore, according to the present invention, when the roll angle satisfies a first condition, the distance **D** satisfies a first relation with the roll angle and wherein, when the roll angle satisfies a second condition, the distance **D** satisfies a second relation with the roll angle. In particular, when the roll angle satisfies the first condition, the roll angle has a value comprised in a first range, conveniently from 0° to ±45°; furthermore, when the roll angle satisfies the second condition, the roll angle has a value comprised in a second range, conveniently from 45° to 90° or from -45° to -90°. In addition, according to the present invention, when the distance **D** satisfies the first relation with the roll angle, the distance **D** increases proportionally with the value of the roll angle (see Figures 6 and 7a)-c), the latter showing the distance **D,** assuming values x₁, x₂ and x₃, at angles 0°, 27,5° and 45°, with x₃ greater than x₂ and x₂ greater than x₁); furthermore, according to the present invention, when the distance **D** satisfies the second relation with the roll angle, the distance **D** decreases proportionally with the value of the roll angle (see Figures 7d)-f) showing the distance **D,** assuming values x₄, x₅ and x₆, at angles 45°, 67,5° and 90°, with x₆ lower than x₅ and x₅ lower than x₄).

It is furthermore noted that, the values of the distance **D** when the roll angle is equal to 0° and when the roll angle is equal to ±90° are equal (thus, values x₁ and x₆ are equal); furthermore, the value of the distance **D** is maxed when the roll angle is equal to ±45°.

The sub-bands **B₁-B₃** have, in a direction orthogonal to the sub-bands **B₁-B₃,** progressively decreasing heights **H₁-H₃,** taken along the second direction, and progressively increasing interspacing **d₁, d₂,** taken along the second direction; it is notes that the heights **H₁-H₃** and the interspacing **d₁, d₂** vary, but the height **H_{SV},** which is given as the sum of the heights **H₁-H₃** and the interspacing **d₁, d₂, of** the sky veil **SV** is constant. Furthermore, the heights **H₁-H₃** and the interspacing **d₁, d₂** of the sub-bands **B₁-B₃** are invariable with the roll angle of the aircraft **2.**

The heights **H₁-H₃** of the sub-bands **B₁-B₃** are percentages of the height **H** of the rendered image; and the interspacing **d₁, d₂** of the sub-bands **B1-B3** are percentages of the height of the rendered image.

According to the embodiment shown in Figures 5-7, the value of the height **H₁** is greater than the value of the height **H₂,** the latter having a value higher than the value of the height **H₃.** According to the embodiment shown in Figure 6, the heights **H₁-H₃** are a function, in particular a percentage, conveniently and exemplarily 5%, 3% and 2%, of the height **H** of the rendered image, and is invariable with the pitch and roll angles of the aircraft **2.** Furthermore, the bands **B₁** and **B₂** are distanced one another at interspacing **d₁,** which is a function, in particular a percentage, conveniently 1%, of the height **H** of the rendered image; the bands **B₂** and **B₃** are distanced one another at interspacing **d₂,** which is greater, in terms of absolute value, than interspacing **d₁,** in detail a function, in particular a percentage, conveniently and exemplarily 3%, of the height **H** of the rendered image.

The sub-bands **B₁-B₃** have transparencies which are constant along their widths and are invariable with the roll angle of the aircraft **2.** In particular, according to the embodiment of Figures 5-7, the widths of the sub-bands **B₁-B₃** are equal to the width **W_{SV}** of the sky veil **SV** and, thus, the width **W** of the rendered image. In particular, the transparency of a first band **B₁** is conveniently and exemplarily equal or close to 0%, so as to be substantially fully opaque, and transparencies of the other sub-bands **B₂, B₃** have constant values higher than that of the first band **B₁.** In further detail, the transparency of the sub-band **B₁** is conveniently and exemplarily equal or close to 0%, and, hence, is substantially fully opaque regardless of the roll angle of the aircraft **2;** furthermore, the transparencies of the sub-bands **B₂** and **B₃** each has a fixed value, conveniently and exemplarily 20% and 40% respectively. Thus, regardless of the roll angle, the transparencies of the bands **B₁-B₃** are constant throughout the flight of the aircraft **2.**

It is noted that the abovementioned values for the width, height and transparency of the sub-bands **B₁-B₃** may be varied and customized according, *e.g.,* to the needs of the pilot **13** or other visualisation criteria.

The sky veil **SV** according to the Sloshing and Multi-Strip embodiments may include a border which is, according to an aspect of the present invention, opaque, or at least substantially opaque, and is also rendered with the second color. As such, those portions of the border of the sky veil **SV** that overlap with rendered sky are also not discernable; furthermore, rendered terrain is not viewable through the border. It is also noted that, according to an aspect of the present invention, the edges of the border are preferably faded to give it a soft look and to avoid it looking like a horizon line. Furthermore, the sky veil **SV** could, in some embodiments, be rendered without the border.

The avionic display system **1** is configured such that the sky veil **SV** is rendered in the same color as any rendered sky. Hence, according to an embodiment of the present invention, there is no triggering mechanism or event that causes the sky veil **SV** to be rendered but, rather, the latter is continuously rendered. According to further embodiments of the present invention, the sky veil **SV** is selectively rendered in response to a triggering mechanism or event. It is noted that, during normal *blue-over-brown* display situations, the sky veil **SV** is not discernable from the rendered sky, and will not present a potential distraction to the pilot.

In view of the foregoing, the advantages of the system according to the present invention are apparent.

In particular, the avionic display system **1** is designed to help the flight crew in difficult situations, *e*.*g*. brown-over-brown situations where the sky is not always visible, by displaying the position of the sky by means of a rendered veil, *i.e.* the sky veil **SV,** during the flight. Furthermore, as also stated above with reference to the abovementioned modes, the avionic display system **1** is designed to allow a better situational awareness for the pilot and, in general, the flight crew, thereby reducing the presence of situations that would create confusion and/or disorientation in the flight crew.

It is clear that modifications can be made to the described system and method which do not extend beyond the scope of protection defined by the claims.

For example, the present vehicle display system **1** may be used for any type of aircraft, thereby achieving the same advantages, it is noted that, in these cases, the avionic display system **1** may have to be adapted on the basis of the particular application.

## Claims

1. An avionic display software for an aircraft **(2)** comprising:
- a display device **(3)** coupled to receive image rendering display commands and responsively display rendered images;
- a terrain data source **(4)** to output terrain data representative of terrain in a field of view of a pilot **(13)** of the aircraft **(2);**
- an avionic flight data source **(10)** to output avionic data representative of an avionic state of the aircraft **(2),** including a roll angle thereof; and
- computing resources **(6)** coupled to the terrain data source **(4)** to receive terrain data therefrom, to the avionic flight data source **(10)** to receive avionic data therefrom, and to the display device **(3)** to supply image rendering display commands thereto based on the received terrain and avionic data;
the avionic display software is executable by the computing resources **(6)** to cause, when executed, the computing resources **(6)** to become programmed to cause rendered images representative of an out-the-window view of the pilot of the aircraft **(2)** to be displayed by the display device **(3);**
a rendered image comprises one or both of rendered terrain **(RT)** and rendered sky **(RS),** which are representative of real-world terrain and sky outside of the aircraft **(2)** and whose positions and orientations are dependent upon position and orientation of the aircraft **(2)** relative thereto;
a rendered image further comprises a rendered sky veil **(SV);**
the sky veil **(SV)** is an overlapping graphic representation rendered at least partially transparent in such a manner that (i) portions of the rendered sky veil **(SV)** that (eventually) overlap with the rendered sky **(RS)** are not discernable from the rendered sky **(RS),** and (ii) the rendered terrain **(RT)** is viewable through transparent portions of the sky veil **(SV)** that overlap with the rendered terrain **(RT);**
the sky veil **(SV)** is rendered as a band with a motion in the rendered image during roll of the aircraft **(2)** as a function of a roll angle thereof;
wherein the sky veil **(SV)** is rendered as a band comprising a plurality of parallel and spaced-apart sub-bands **(B₁-B₃);** and the sky veil **(SV)** is rendered at least partially transparent along its height; and
the rendered image further includes rendered flight-related information comprising a rendered zero pitch reference line **(RL),** wherein the sky veil **(SV)** is rendered parallel to the rendered zero pitch reference line **(RL)** at a distance **(D)** therefrom which is dependent on the roll angle of the aircraft **(2);**
when the roll angle satisfies a first condition, the distance **(D)** satisfies a first relation with the roll angle and wherein, when the roll angle satisfies a second condition, the distance **(D)** satisfies a second relation with the roll angle; and
when the distance **(D)** satisfies the first relation with the roll angle, the distance **(D)** increases proportionally with the roll angle and, when the distance **(D)** satisfies the second relation with the roll angle, the distance **(D)** decreases proportionally with the roll angle.

2. The avionic display software **(1)** of claim 1, wherein, when the roll angle satisfies the first condition, the roll angle has a value comprised in a first range, conveniently from 0° to ±45°, and wherein, when the roll angle satisfies the second condition, the roll angle has a value comprised in a second range, conveniently from 45° to 90° or from -45° to -90°.

3. The avionic display software (1) of claim 1 or 2, wherein the sky veil **(SV)** is rendered to exhibit one or more of the following features:
a) extending parallel to a skyward edge of the rendered image;
b) extending for an entire width **(W)** of the skyward edge of the rendered image;
c) extending from the skyward edge of the rendered image for a height **(H_{SV})** which is a function, in particular a percentage, of a height **(H)** of the rendered image;
d) having substantially constant height **(H_{SV})** throughout its width **(W_{SV})** ; and
e) having the same color as the rendered sky **(RS).**

4. The avionic display software **(1)** of any one of claims 1-3, wherein the sub-bands **(B₁-B₃)** have, in a direction orthogonal to the sub-bands **(B₁-B₃),** progressively decreasing heights **(H₁-H₃)** and progressively increasing interspacing **(d₁, d₂).**

5. The avionic display software **(1)** of any one of claims 1-4, wherein the heights **(H₁-H₃)** and interspacing **(d₁, d₂)** of the sub-bands **(B₁-B₃)** are invariable with the roll angle of the aircraft **(2).**

6. The avionic display software **(1)** of claim 4 or 5, wherein the heights **(H₁-H₃)** of the sub-bands **(B₁-B₃)** are percentages of the height of the rendered image; and the interspacing **(d₁, d₂)** of the sub-bands **(B₁-B₃)** are percentages of the height of the rendered image.

7. The avionic display software **(1)** of any one of any one of claims 1-6, wherein the sub-bands **(B₁-B₃)** have transparencies which are constant along their widths **(W_{SV})** and are invariable with the roll angle of the aircraft **(2).**

## Patentansprüche

1. Avionik-Anzeigesoftware für ein Flugzeug (2), aufweisend:
eine Anzeigevorrichtung (3), die derart verbunden ist, dass sie Bild-Rendering-Anzeigebefehle empfängt und in Antwort darauf gerenderte Bilder anzeigt;
eine Geländedatenquelle **(4)** zum Ausgeben von Geländedaten, die ein Gelände in einem Sichtfeld eines Piloten (13) des Flugzeugs (2) darstellen;
eine Avionik-Flugdatenquelle (10) zum Ausgeben von Avionikdaten, die einen Avionikzustand des Flugzeugs (2) darstellen, einschließlich dessen Rollwinkel; und
Rechenressourcen (6), die mit der Geländedatenquelle (4) verbunden sind, um von dieser Geländedaten zu empfangen, mit der Avionik-Flugdatenquelle (10) verbunden sind, um von dieser Avionikdaten zu empfangen, und mit der Anzeigevorrichtung (3) verbunden sind, um dieser basierend auf den empfangenen Gelände- und Avionikdaten Bild-Rendering-Anzeigebefehle zuzuführen,
wobei die Avionik-Anzeigesoftware durch die Rechenressourcen (6) ausführbar ist, um, wenn sie ausgeführt wird, zu veranlassen, dass die Rechenressourcen (6) derart programmiert werden, dass veranlasst wird, dass gerenderte Bilder, die eine Außenansicht des Piloten des Flugzeugs (2) darstellen, durch die Anzeigevorrichtung (3) angezeigt werden,
wobei ein gerendertes Bild ein gerendertes Gelände (RT) und/oder gerenderten Himmel (RS) aufweist, die das reale Gelände und den realen Himmel außerhalb des Flugzeugs (2) repräsentieren und deren Positionen und Ausrichtungen von der Position und Ausrichtung des Flugzeugs (2) relativ dazu abhängen,
wobei ein gerendertes Bild ferner einen gerenderten Himmelsschleier (SV) aufweist,
wobei der Himmelsschleier (SV) eine überlappende grafische Darstellung ist, die zumindest teilweise transparent derart gerendert ist, dass (i) Teile des gerenderten Himmelsschleiers (SV), die (letztendlich) den gerenderten Himmel (RS) überlappen, nicht vom gerenderten Himmel (RS) unterscheidbar sind, und (ii) das gerenderte Gelände (RT) durch transparente Teile des Himmelsschleiers (SV) hindurch sichtbar ist, die das gerenderte Gelände (RT) überlappen,
wobei der Himmelsschleier (SV) während der Rollbewegung des Flugzeugs (2) als ein Band mit einer Bewegung im gerenderten Bild als Funktion des Rollwinkels des Flugzeugs gerendert wird,
wobei der Himmelsschleier (SV) als ein Band gerendert wird, das eine Vielzahl von parallelen und voneinander beabstandeten Unterbändern (B₁-B₃) aufweist, und der Himmelsschleier (SV) entlang seiner Höhe zumindest teilweise transparent gerendert wird, und
wobei das gerenderte Bild ferner gerenderte flugbezogene Information aufweist, die eine gerenderte Null-Nickreferenzlinie (RL) enthält, wobei der Himmelsschleier (SV) parallel zur gerenderten Null-Nickreferenzlinie (RL) in einem Abstand (D) davon gerendert wird, der vom Rollwinkel des Flugzeugs (2) abhängt,
wobei, wenn der Rollwinkel eine erste Bedingung erfüllt, der Abstand (D) eine erste Beziehung mit dem Rollwinkel erfüllt, und wenn der Rollwinkel eine zweite Bedingung erfüllt, der Abstand (D) eine zweite Beziehung mit dem Rollwinkel erfüllt, und
wenn der Abstand (D) die erste Beziehung mit dem Rollwinkel erfüllt, der Abstand (D) proportional zum Rollwinkel zunimmt, und wenn der Abstand (D) die zweite Beziehung mit dem Rollwinkel erfüllt, der Abstand (D) proportional zum Rollwinkel abnimmt.

2. Avionik-Anzeigesoftware (1) nach Anspruch 1, wobei, wenn der Rollwinkel die erste Bedingung erfüllt, der Rollwinkel einen Wert in einem ersten Bereich hat, der geeignet 0° bis ±45° beträgt, und wobei, wenn der Rollwinkel die zweite Bedingung erfüllt, der Rollwinkel einen Wert in einem zweiten Bereich hat, der geeignet 45° bis 90° oder -45° bis -90° beträgt.

3. Avionik-Anzeigesoftware (1) nach Anspruch 1 oder 2, wobei der Himmelsschleier (SV) derart gerendert wird, dass er eines oder mehrere der folgenden Merkmale aufweist:
a) sich parallel zu einem zum Himmel gerichteten Rand des gerenderten Bildes erstreckt;
b) sich über die gesamte Breite (W) des zum Himmel gerichteten Rands des gerenderten Bildes erstreckt;
c) sich von dem zum Himmel gerichteten Rand des gerenderten Bildes über eine Höhe (Hsv) erstreckt, die eine Funktion, insbesondere ein Prozentsatz, einer Höhe (H) des gerenderten Bildes ist;
d) eine im Wesentlichen konstante Höhe (Hsv) über seine gesamte Breite (Wsv) aufweist; und
e) die gleiche Farbe wie der gerenderte Himmel (RS) aufweist.

4. Avionik-Anzeigesoftware (1) nach einem der Ansprüche 1 bis 3, wobei die Unterbänder (B₁-B₃) in einer Richtung orthogonal zu den Unterbändern (B₁-B₃) schrittweise abnehmende Höhen (H₁-H₃) und schrittweise zunehmende Abstände voneinander (d₁, d₂) aufweisen.

5. Avionik-Anzeigesoftware (1) nach einem der Ansprüche 1 bis 4, wobei die Höhen (H₁-H₃) und Abstände (d₁, d₂) der Unterbänder (B₁-B₃) unabhängig vom Rollwinkel des Flugzeugs (2) sind.

6. Avionik-Anzeigesoftware (1) nach Anspruch 4 oder 5, wobei die Höhen (H₁-H₃) der Unterbänder (B₁-B₃) Prozentsätze der Höhe des gerenderten Bildes sind und die Abstände (d₁, d₂) der Unterbänder (B₁-B₃) Prozentsätze der Höhe des gerenderten Bildes sind.

7. Avionik-Anzeigesoftware (1) nach einem der Ansprüche 1 bis 6, wobei die Unterbänder (B₁-B₃) Transparenzen aufweisen, die entlang ihrer Breiten (Wsv) konstant und unabhängig vom Rollwinkel des Flugzeugs (2) sind.

## Revendications

1. Logiciel d'affichage avionique pour un aéronef **(2)** comprenant :
- un dispositif d'affichage **(3)** couplé pour recevoir des commandes d'affichage de rendu d'image et en réponse afficher des images rendues ;
- une source de données topographiques **(4)** pour délivrer en sortie des données topographiques représentatives de la topographie dans un champ de vision d'un pilote **(13)** de l'aéronef **(2)** ;
- une source de données avioniques de vol **(10)** pour délivrer en sortie des données avioniques représentatives d'un état avionique de l'aéronef **(2),** dont un angle de roulis ce celui-ci ; et
- des ressources informatiques **(6)** couplées à la source de données topographiques **(4)** pour recevoir des données topographiques en provenance de celle-ci, à la source de données avioniques de vol **(10)** pour recevoir des données avioniques en provenance de celle-ci, et au dispositif d'affichage **(3)** pour fournir des commandes d'affichage de rendu d'image à celui-ci sur la base des données topographiques et avioniques reçues ;
le logiciel d'affichage avionique est exécutable par les ressources informatiques **(6)** pour amener, lorsqu'il est exécuté, les ressources informatiques **(6)** à devenir programmées pour amener des images rendues représentatives d'une vue de type par-la-fenêtre du pilote de l'aéronef **(2)** à être affichées par le dispositif d'affichage **(3)** ;
une image rendue comprend l'un ou les deux parmi une topographie rendue **(RT)** et un ciel rendu **(RS),** qui sont représentatifs de la topographie et du ciel du monde réel à l'extérieur de l'aéronef **(2)** et dont les positions et les orientations sont dépendantes de la position et de l'orientation de l'aéronef **(2)** par rapport à ceux-ci ;
une image rendue comprend en outre un voile de ciel **(SV)** rendu ;
le voile de ciel **(SV)** est une représentation graphique superposée rendue en étant au moins partiellement transparente d'une manière telle que (i) des parties du voile de ciel **(SV)** rendu qui (facultativement) sont superposées sur le ciel rendu **(RS)** ne soient pas discernables du ciel rendu **(RS),** et (ii) la topographie rendue **(RT)** soit visualisable à travers des portions transparentes du voile de ciel **(SV)** qui sont superposées sur la topographie rendue **(RT)** ;
le voile de ciel **(SV)** est rendu sous la forme d'une bande dotée d'un mouvement dans l'image rendue pendant un roulis de l'aéronef **(2),** en fonction d'un angle de roulis de celui-ci ;
dans lequel le voile de ciel **(SV)** est rendu sous la forme d'une bande comprenant une pluralité de sous-bandes **(B₁-B₃)** parallèles et espacées ; et le voile de ciel **(SV)** est rendu en étant au moins partiellement transparent le long de sa hauteur ; et
l'image rendue comporte en outre des informations liées au vol rendues comprenant une ligne de référence **(RL)** de tangage nul rendue, dans lequel le voile de ciel **(SV)** est rendu parallèlement à la ligne de référence **(RL)** de tangage nul rendue à une distance **(D)** de celle-ci qui est dépendante de l'angle de roulis de l'aéronef (2) ;
lorsque l'angle de roulis satisfait une première condition, la distance **(D)** satisfait une première relation avec l'angle de roulis et dans lequel, lorsque l'angle de roulis satisfait une seconde condition, la distance **(D)** satisfait une seconde relation avec l'angle de roulis ; et
lorsque la distance **(D)** satisfait la première relation avec l'angle de roulis, la distance **(D)** augmente proportionnellement à l'angle de roulis et, lorsque la distance **(D)** satisfait la seconde relation avec l'angle de roulis, la distance **(D)** diminue proportionnellement à l'angle de roulis.

2. Logiciel d'affichage avionique **(1)** selon la revendication 1, dans lequel, lorsque l'angle de roulis satisfait la première condition, l'angle de roulis possède une valeur comprise dans une première plage, idéalement de 0° à ± 45°, et dans lequel, lorsque l'angle de roulis satisfait la seconde condition, l'angle de roulis possède une valeur comprise dans une seconde plage, idéalement de 45° à 90° ou de -45° à -90°.

3. Logiciel d'affichage avionique **(1)** selon la revendication 1 ou 2, dans lequel le voile de ciel **(SV)** est rendu pour présenter une ou plusieurs des caractéristiques suivantes :
a) s'étendant parallèlement à un bord vers le ciel de l'image rendue ;
b) s'étendant sur la totalité d'une largeur **(W)** du bord vers le ciel de l'image rendue ;
c) s'étendant à partir du bord vers le ciel de l'image rendue sur une hauteur **(H_{SV})** qui est une fonction, en particulier un pourcentage, d'une hauteur **(H)** de l'image rendue ;
d) ayant une hauteur **(H_{SV})** sensiblement constante sur toute sa largeur **(W_{SV})** ; et
e) ayant la même couleur que le ciel rendu **(RS).**

4. Logiciel d'affichage avionique **(1)** selon l'une quelconque des revendications 1 à 3, dans lequel les sous-bandes **(B₁-B₃)** possèdent, dans une direction orthogonale aux sous-bandes **(B₁-B₃),** des hauteurs **(H₁-H₃)** progressivement décroissantes et un espacement **(d₁, d₂)** progressivement croissant.

5. Logiciel d'affichage avionique **(1)** selon l'une quelconque des revendications 1 à 4, dans lequel les hauteurs **(H₁-H₃)** et l'espacement **(d₁, d₂)** des sous-bandes **(B₁-B₃)** sont invariables par rapport à l'angle de roulis de l'aéronef **(2).**

6. Logiciel d'affichage avionique **(1)** selon la revendication 4 ou 5, dans lequel les hauteurs **(H₁-H₃)** des sous-bandes **(B₁-B₃)** sont des pourcentages de la hauteur de l'image rendue ; et l'espacement **(d₁, d₂)** des sous-bandes **(B₁-B₃)** sont des pourcentages de la hauteur de l'image rendue.

7. Logiciel d'affichage avionique **(1)** selon l'une quelconque des revendications 1 à 6, dans lequel les sous-bandes **(B₁-B₃)** possèdent des transparences qui sont constantes le long de leurs largeurs **(Wsv)** et sont invariables par rapport à l'angle de roulis de l'aéronef **(2).**
